# EUROPEAN PATENT APPLICATION

(11) **EP 2 423 064 A1**
(43) Date of publication of application: **29.02.2012**
(21) Application number: 10848897.4
(22) Date of filing: 30.03.2010
(51) Int. Cl.: B60W 10/00, B60K 6/445, B60W 20/00

(54) **VEHICLE CONTROL UNIT AND VEHICLE CONTROL METHOD**

(71) Applicant: Toyota Jidosha Kabushiki Kaisha, Toyota-shi, Aichi 471-8571 (JP)
(72) Inventor: ENDO, Hiroki, Toyota-shi Aichi 471-8571 (JP); YAMAMOTO, Masaya, Toyota-shi Aichi 471-8571 (JP)
(74) Representative: Smith, Samuel Leonard
(86) International application number: PCT/JP2010/055646
(87) International publication number: WO 2011/121717

(57) **Abstract**

An ECU executes a program including the steps of: executing first restriction control (S104) if the temperature Tw of coolant is equal to or greater than a first temperature Tw(0) (YES in S100) and smaller than a second temperature Tw(1) (YES in S102); executing second restriction control (S106) if the temperature Tw of the coolant is equal to or greater than the second temperature Tw(1) (NO in S102); and executing normal control (S108) if the temperature Tw of the coolant is smaller than the first temperature Tw(0) (NO in S100).

## Description

### TECHNICAL FIELD

The present invention relates to control for a vehicle equipped with an internal combustion engine and an electric motor as power sources for the vehicle to run, and more particularly to a technique for limiting discharged power from a power storage device supplying electric power to an electric rotating machine according to the temperature of coolant of electric equipment for operating the electric motor during EV running.

### BACKGROUND ART

A hybrid vehicle has received attention as an environmentally friendly vehicle. In addition to a conventional internal combustion engine, the hybrid vehicle is equipped with an electric motor driven by a power storage device and a power converter (for example, inverter) as power sources for the vehicle to run. The power converter generates heat when operating the electric motor and is thus provided with a cooling device.

As such a vehicle, for example, Japanese Patent Laying-Open No. 2009-254206 (Patent Literature 1) discloses a vehicle equipped with a power source control system for effectively preventing a temperature increase of a voltage converter when an abnormality occurs in a cooling system for an inverter. This power source control system includes a voltage converter including a reactor and being capable of stepping up/down voltage between a low voltage and a high voltage, an inverter connected between a load being operated with high voltage AC power and the voltage converter, and auxiliary equipment output limiting means for limiting output of auxiliary equipment, which is connected in parallel between a low voltage power storage device and the voltage converter for being operated with low voltage power, in accordance with the temperature of the reactor.

According to the power source control system disclosed in the above publication, when input/output of power to/from the low voltage power storage device is restricted, the voltage converter is prevented from supplying electric power to the auxiliary equipment, thereby preventing a temperature increase of the inverter and a temperature increase of the voltage converter.

As a hybrid vehicle, an externally rechargeable vehicle is also publicly known which is equipped with a large-capacity storage device in order to increase the EV running distance when the vehicle runs using motive power from an electric motor with an internal combustion engine shut down (hereinafter referred as EV running).

### CITATION LIST

### PATENT LITERATURE

PTL 1: Japanese Patent Laying-Open No. 2009-254206

### SUMMARY OF INVENTION

### TECHNICAL PROBLEM

In order to continuously carry out EV running for a long time, running power adaptable to an increase of load due to uphill running, frequent acceleration or the like is required. However, in order to obtain the required running power, if an upper limit value Wout of discharged power from the power storage device is made larger than during running using the internal combustion engine and the electric motor (hereinafter referred to as during HV running), the amount of heat generated from the electric equipment such as the power converter for operating the electric motor increases, which accelerates degradation of a component such as a semiconductor device included in the electric equipment.

The power source control system disclosed in the above publication never considers such a problem and therefore does not solve the problem. Furthermore, when power supply is restricted at a moment when it is determined that an abnormality occurs in the cooling system for the inverter, as in the power source control system disclosed in the above publication, the running performance as intended by the driver may suddenly fail to be achieved immediately after the restriction on power supply is started.

An object of the present invention is to provide a vehicle control apparatus and a vehicle control method for preventing the effect caused by heat from electric equipment for operating an electric motor due to an increase of discharged power from a power storage device. A further object of the present invention is to provide a vehicle control apparatus and a vehicle control method for gently restricting power supply from the power storage device in accordance with the temperature of coolant of the electric equipment when the vehicle runs using an electric rotating machine with an internal combustion engine shut down.

### SOLUTION TO PROBLEM

A vehicle control apparatus according to an aspect of the present invention is installed in a vehicle having an internal combustion engine and an electric rotating machine as driving sources. The vehicle includes the electric rotating machine, electric equipment operating upon driving of the electric rotating machine, a power storage device supplying electric power to the electric rotating machine and the electric equipment and being rechargeable using an external power source, and a cooling device for cooling the electric equipment using a cooling medium. The vehicle control apparatus includes a medium temperature detection unit (38) for detecting a temperature of the cooling medium, and a control unit for determining an upper limit value of discharged power from the power storage device in accordance with the temperature of the cooling medium and controlling discharged power from the power storage device so as not to exceed the determined the upper limit value. If the temperature of the cooling medium increases from a first temperature to a second temperature, the control unit determines the upper limit value such that a reduction rate of the upper limit value in accordance with an increase of the temperature of the cooling medium at a time when the vehicle runs in a first running state of running using motive power of the electric rotating machine with the internal combustion engine shut down is greater than a reduction rate of the upper limit value in accordance with an increase of the temperature of the cooling medium at a time when the vehicle runs in a second running state of running using both motive power of the internal combustion engine and motive power of the electric rotating machine.

Preferably, the vehicle control apparatus further includes a power storage device temperature detection unit for detecting a temperature of the power storage device. If the temperature of the power storage device is equal to or greater than a predetermined temperature and if the temperature of the cooling medium is equal to or smaller than the first temperature, the control unit controls discharged power from the power storage device by increasing the upper limit value of the discharged power in accordance with the temperature of the power storage device when the vehicle runs in the first running state as compared with when the vehicle runs in the second running state.

Further preferably, if the temperature of the cooling medium is greater than the second temperature, the control unit determines the upper limit value of the discharged power in the case where the vehicle runs in the second running state, as the upper limit value of the discharged power in the case where the vehicle runs in the first running state.

Further preferably, if the temperature of the cooling medium increases from the first temperature to the second temperature, the control unit determines the upper limit value such that the upper limit value decreases linearly with respect to the temperature increase of the cooling medium.

A vehicle control method according to another aspect of the present invention is installed in a vehicle having an internal combustion engine and an electric rotating machine as driving sources. The vehicle includes the electric rotating machine, electric equipment operating upon driving of the electric rotating machine, a power storage device supplying electric power to the electric rotating machine and the electric equipment and being rechargeable using an external power source, and a cooling device for cooling the electric equipment using a cooling medium. The vehicle control method includes the steps of: detecting a temperature of the cooling medium; and determining an upper limit value of discharged power from the power storage device in accordance with the temperature of the cooling medium and controlling discharged power from the power storage device so as not to exceed the upper limit value determined in the step of determining an upper limit value. If the temperature of the cooling medium increases from a first temperature to a second temperature, the step of controlling determines the upper limit value such that a reduction rate of the upper limit value in accordance with an increase of the temperature of the cooling medium at a time when the vehicle runs in a first running state of running using motive power of the electric rotating machine with the internal combustion engine shut down is greater than a reduction rate of the upper limit value in accordance with an increase of the temperature of the cooling medium at a time when the vehicle runs in a second running state of running using both motive power of the internal combustion engine and motive power of the electric rotating machine.

### ADVANTAGEOUS EFFECTS OF INVENTION

According to the present invention, when EV running continues for a long time with the upper limit value of discharged power from the power storage device being made larger during EV running than during HV running, acceleration of degradation of a component such as a semiconductor device included in electric equipment can be prevented. Therefore, the present invention provides a vehicle control apparatus and a vehicle control method for preventing the effect caused by heat from the electric equipment for operating the electric motor due to an increase of discharged power from the power storage device.

### BRIEF DESCRIPTION OF DRAWINGS

Fig. 1 is an overall configuration diagram showing a configuration of a vehicle equipped with a vehicle control apparatus according to an embodiment of the present invention.
Fig. 2 is a diagram showing the relation between a temperature TB of a power storage device and each of an upper limit value Wev of discharged power during EV running and an upper limit value Whv of discharged power during HV running.
Fig. 3 is a functional block diagram of an ECU serving as the vehicle control apparatus according to the present embodiment.
Fig. 4 is a diagram showing the relation between a temperature Tw of coolant and each of the upper limit value Wev of discharged power during EV running and the upper limit value Whv of discharged power during HV running.
Fig. 5 is a flowchart showing a control structure of a program executed in the ECU serving as the vehicle control apparatus according to the present embodiment.
Fig. 6 is a timing chart showing an operation of the ECU serving as the vehicle control apparatus according to the present embodiment.

### DESCRIPTION OF EMBODIMENTS

An embodiment of the present invention will be described below in detail with reference to the drawings. In the following description, the same units are denoted by the same reference characters. Their names and functions are also the same. Therefore, a detailed description thereof will not be repeated.

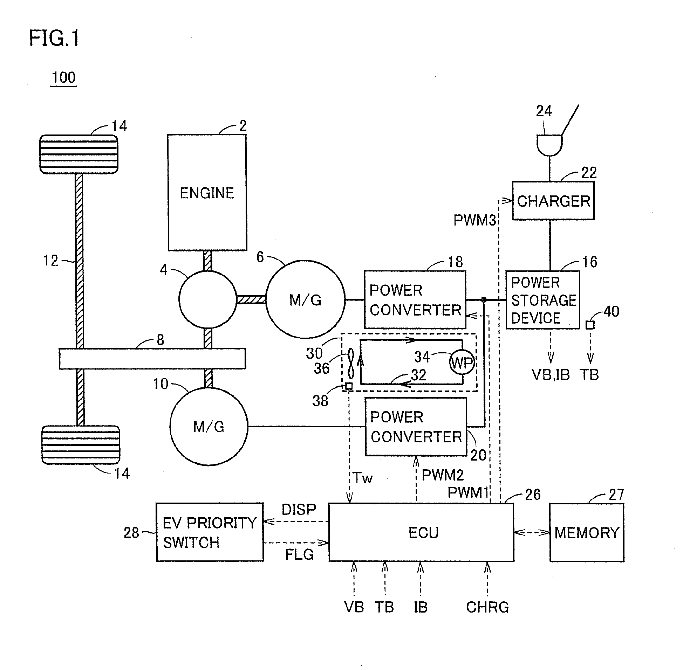

As shown in Fig. 1, a hybrid vehicle 100 includes an engine 2, a power split mechanism 4, motor generators 6, 10, a transmission gear 8, a drive shaft 12, wheels 14, a power storage device 16, power converters 18, 20, a charger 22, a charging inlet 24, an ECU (Electronic Control Unit) 26, a memory 27, an EV priority switch 28, and a cooling system 30. Vehicle 100 is a hybrid vehicle having engine 2 and motor generator 10 as driving sources.

Power split mechanism 4 is coupled to engine 2, motor generator 6 and transmission gear 8 to split motive power among them. For example, a planetary gear train having three rotation shafts of a sun gear, a planetary carrier and a ring gear can be used as power split mechanism 4. These three rotation shafts are connected to the rotation shafts of engine 2, motor generator 6 and transmission gear 8, respectively. The rotation shaft of motor generator 10 is coupled to that of transmission gear 8. That is, motor generator 10 and transmission gear 8 share the same rotation shaft, which is connected to the ring gear of power split mechanism 4.

Kinetic energy produced by engine 2 is distributed to motor generator 6 and transmission gear 8 by power split mechanism 4. That is, engine 2 is incorporated into hybrid vehicle 100 as a power source that drives transmission gear 8 transmitting motive power to drive shaft 12 and drives motor generator 6. Motor generator 6 is incorporated into hybrid vehicle 100 to operate as a generator driven by engine 2 and as a motor capable of starting engine 2. Motor generator 10 is incorporated into hybrid vehicle 100 to operate as a power source that drives transmission gear 8 transmitting motive power to drive shaft 12.

Power storage device 16 is a chargeable and dischargeable DC power source, and is implemented by, for example, a nickel-metal hydride, lithium ion or similar secondary battery. Power storage device 16 supplies electric power to power converters 18 and 20. Power storage device 16 is charged with electric power received from power converter(s) 18 and/or 20 during power generation of motor generator(s) 6 and/or 10. Further, power storage device 16 is charged with electric power received through charger 22 during charging from a power source outside the vehicle (hereinafter also referred to as an "external power source"), which is not shown but connected to charging inlet 24. A large-capacitance capacitor may be employed as power storage device 16. Any electric power buffer may be used that can temporarily store electric power generated by motor generators 6 and 10 or electric power from the external power source to supply the stored electric power to motor generators 6 and 10. Power storage device 16 is provided with a power storage device temperature sensor 40 detecting a temperature TB of power storage device 16. Power storage device temperature sensor 40 outputs the detected value to ECU 26. A voltage VB at power storage device 16 and a current IB flowing in/out of power storage device 16 are detected by sensors not shown, and their detected values are output to ECU 26.

Based on a signal PWM1 from ECU 26, power converter 18 converts electric power generated by motor generator 6 into DC power for output to power storage device 16. Based on a signal PWM2 from ECU 26, power converter 20 converts DC power supplied from power storage device 16 into AC power for output to motor generator 10. At the time of starting engine 2, based on signal PWM1, power converter 18 converts DC power supplied from power storage device 16 into AC power for output to motor generator 6. During regenerative braking; for example, during braking of the vehicle or reduction in the acceleration on a down slope, power converter 20, based on signal PWM2, converts electric power generated by motor generator 10 into DC power for output to power storage device 16.

Motor generators 6 and 10 are AC motors, and are each implemented by, for example, a three-phase synchronous motor with permanent magnets embedded in a rotor. Motor generator 6 converts kinetic energy produced by engine 2 into electric energy for output to power converter 18. Motor generator 6 generates driving force by three-phase AC power received from power converter 18 to start engine 2.

Motor generator 10 generates driving torque for the vehicle by three-phase AC power received from power converter 20. During regenerative braking, for example, during braking of the vehicle or reduction in the acceleration on a down slope, motor generator 10 converts mechanical energy stored in the vehicle as kinetic energy or potential energy into electric energy for output to power converter 20.

Engine 2 converts thermal energy produced by fuel combustion into kinetic energy for a movable member such as a piston or a rotor, and outputs the converted kinetic energy to power split mechanism 4. For example, assuming that the movable member is a piston and is making a reciprocating motion, the reciprocating motion is converted into a rotational motion through a so-called crank mechanism, such that the kinetic energy of the piston is transmitted to power split mechanism 4.

Based on a signal PWM3 from ECU 26, charger 22 converts electric power received through charging inlet 24 from the external power source into a voltage level at power storage device 16 for output to power storage device 16. Charging inlet 24 is an external charging interface through which electric power is supplied to power storage device 16 from the external power source.

ECU 26 generates signals PWM1 and PWM2 for driving power converters 18 and 20, respectively, and outputs generated signals PWM1 and PWM2 to power converters 18 and 20, respectively. Upon receipt of a signal CHRG requesting that power storage device 16 is charged through charger 22, ECU 26 generates signal PWM3 for driving charger 22, and outputs generated signal PWM3 to charger 22.

Further, ECU 26 controls a change in the running mode of this vehicle 100. More specifically, ECU 26 changes between a motor-running priority mode (hereinafter also referred to as an "EV (Electric Vehicle) priority mode") in which priority is given to running using solely motor generator 10 with engine 2 shut down and a hybrid running mode (hereinafter also referred to as an "HV (Hybrid Vehicle) mode") in which engine 2 is operated to maintain a state of charge (hereinafter also referred to as "SOC") of power storage device 16 at a predetermined target. The SOC represents the amount of stored electric power by 0 to 100% with respect to the fully-charged state of power storage device 16, and is indicative of the remaining amount of stored electric power in power storage device 16.

The term "priority" that occurs in the EV priority mode implies running using solely motor generator 10 basically with engine 2 shut down without maintaining the SOC of power storage device 16 at the predetermined target. That is, engine 2 is exceptionally allowed to operate in situations such as when the driver deeply presses down the accelerator pedal, when an engine-driven-type air conditioner is operated, and during warm-up of the engine.

The EV priority mode of running without maintaining the SOC of power storage device 16 refers to a mode in which the vehicle runs basically with charged electric power in power storage device 16 being consumed by motor generator 10, without starting engine 2 unless the need arises in terms of the driving force. This EV priority mode often results in that discharging has a relatively higher ratio to charging.

The HV mode refers to a running mode in which engine 2 is operated to cause motor generator 6 to generate electric power in order to maintain the SOC of power storage device 16 at the predetermined target value, and is not limited to running with engine 2 continuously operated.

In the following description, "EV running" refers to that vehicle 100 runs using solely motor generator 10 with engine 2 shut down, and "HV running" refers to that vehicle 100 runs using engine 2 and motor generator 10. Therefore, both in the EV priority mode and in the HV mode, one of EV running and HV running is selected depending on the state of vehicle 100.

Further, ECU 26 receives a signal FLG from EV priority switch 28. This signal FLG varies in accordance with a request to change the running mode input by the user at EV priority switch 28. If it is determined based on signal FLG that the change from the EV priority mode to the HV mode has been requested by the user, ECU 26 outputs the SOC of power storage device 16 at that moment to memory 27. ECU 26 then changes the running mode based on signal FLG, the SOC of power storage device 16, and the SOC at the moment of the request for the mode change which is stored in memory 27.

Furthermore, EV priority switch 28 is provided with a display which is turned on/off depending on a running mode. Based on signal FLG from EV priority switch 28, ECU 26 generates a signal DISP for controlling the on/off state of the display provided for EV priority switch 28, and outputs generated signal DISP to EV priority switch 28. While the running mode will not be changed immediately in response to the operation input from EV priority switch 28 depending on an SOC level, ECU 26 controls the on/off state of the display of EV priority switch 28 in response to signal FLG indicative of the request for the mode change made by the user, rather than in response to an actual running mode.

If it is determined by ECU 26 that the change from the EV priority mode to the HV mode has been requested, memory 27 stores the SOC of power storage device 16 at that moment which is output from ECU 26.

EV priority switch 28 is an interface device for allowing the user to request a change in the running mode and reporting to the user that the request has been recognized by the system. When turned on by the user, EV priority switch 28 activates signal FLG to be output to ECU 26, and when turned off by the user, EV priority switch 28 deactivates signal FLG. After the termination of charging of power storage device 16 through charger 22, the running mode is set by default at the EV priority mode, and EV priority switch 28 is set by default at the on state (i.e., signal FLG is activated).

EV priority switch 28 has the display that can be turned on/off, whose display state is changed in response to signal DISP from ECU 26. Specifically, when turned on by the user (i.e., when the change to the EV priority mode is requested), a lamp of EV priority switch 28 is turned on based on signal DISP, and when turned off by the user (i.e., when the change to the HV mode is requested), the lamp of EV priority switch 28 is turned off based on signal DISP.

Cooling system 30 cools power converters 18 and 20. Cooling system 30 includes a coolant path 32, a water pump 34, a radiator 36, and a coolant temperature sensor 38. Cooling system 30 may cool at least one of motor generators 6 and 10 and engine 2, in addition to power converters 18 and 20.

A cooling medium such as coolant circulates through coolant path 32. Coolant path 32 is adjacent to power converters 18 and 20, so that heat generated in power converters 18 and 20 is transmitted to the coolant circulating through coolant path 32. Coolant path 32 is a circulation path passing through water, pump 34 and radiator 36. Water pump 34 allows the coolant in coolant path 32 to circulate along coolant path 32. Radiator 36 is a heat exchanger for exchanging heat with the outside air and emitting heat of the coolant having the temperature increased by the heat transferred from power converters 18 and 20.

Coolant temperature sensor 38 detects a temperature Tw of the coolant in coolant path 32 and transmits a signal indicative of the detected temperature Tw of the coolant to ECU 26. Water pump 34 may be operated upon starting the system of vehicle 100 or may be operated upon starting power converters 18 and 20.

In vehicle 100 having the configuration as described above, in order to continuously carry out EV running using motor generator 10 for a long time with engine 2 shut down, it is necessary to install a large-capacity power storage device and, in addition, to generate running power adaptable to an increase of load due to uphill running, frequent acceleration or the like.

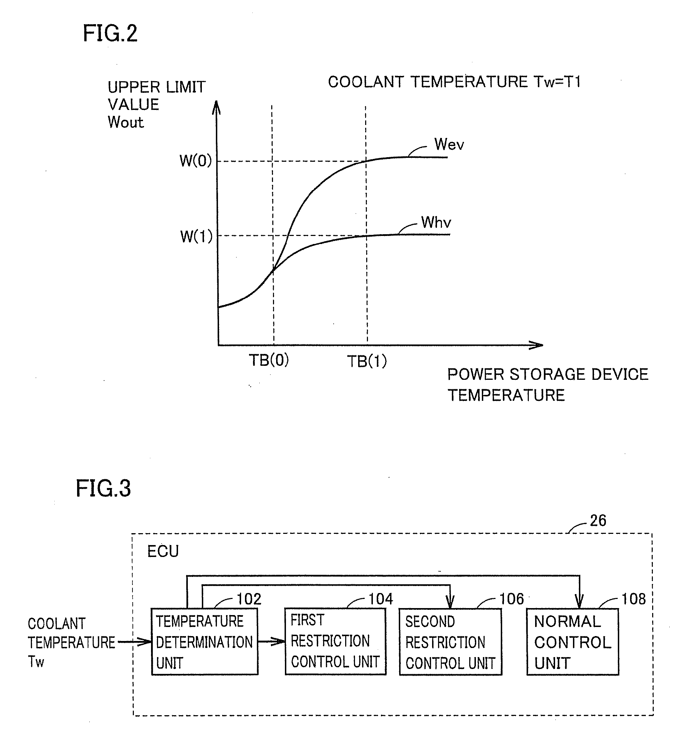

Therefore, as shown in Fig. 2, ECU 26 controls discharged power from power storage device 16 by increasing the upper limit value of discharged power in accordance with the temperature TB of power storage device 16 during EV running as compared with during HV running, for example, if the temperature of power storage device 16 is equal to or greater than a predetermined temperature TB (0) and the temperature Tw of the coolant is T1 smaller than a first temperature Tw(0) as described later.

Specifically, when the temperature TB of power storage device 16 is a temperature TB(1) which is equal to or greater than predetermined value TB(0), the upper limit value Wev (=W(0)) of discharged power from power storage device 16 during EV running in accordance with the temperature TB(1) is increased as compared with the upper limit value Whv (=W(1)) of discharged power from power storage device 16 during HV running in accordance with the temperature TB(1). This ensures running power required to continuously carry out EV running for a long time.

Fig. 2 is a diagram showing the relation between the temperature TB of the power storage device and each of the upper limit value Wev of discharged power during EV running and the upper limit value Whv of discharged power during HV running. The vertical axis in Fig. 2 shows the upper limit value Wout of discharged power, and the horizontal axis in Fig. 2 shows the temperature TB of power storage device 16. The first temperature Tw(0) represents the temperature Tw of the coolant which serves as a threshold value at which the upper limit value Wout of discharged power from power storage device 16 in accordance with the temperature Tw of the coolant is restricted.

However, when the upper limit value Wout of discharged power from power storage device 16 is made larger during EV running than during HV running as described above in order to obtain the required running power during EV running, the amount of heat generated by power converter 20 during EV running increases as compared with the amount of heat generated during HV running, which may accelerate degradation of a component such as a semiconductor device included in power converter 20.

When the upper limit value of power supply is abruptly reduced and restricted at a moment when an abnormality of cooling system 30 is detected based on the temperature Tw of the coolant, the running performance as intended by the driver may suddenly fail to be achieved immediately after the restriction on power supply is started.

Then, the present embodiment is **characterized in that** ECU 26 determines the upper limit value of discharged power from power storage device 16 in accordance with the temperature Tw of the coolant. In particular, when the temperature Tw of the coolant increases from the first temperature Tw(0) to the second temperature Tw(1), ECU 26 determines the upper limit value Wev of discharged power from power storage device 16 such that a reduction rate of the upper limit value Wev in accordance with an increase of the temperature Tw of the coolant during EV running is greater than a reduction rate of the upper limit value Whv in accordance with an increase of the temperature Tw of the coolant during HV running.

Fig. 3 shows a functional block diagram of ECU 26 serving as the vehicle control apparatus according to the present embodiment. As shown in Fig. 3, ECU 26 includes a temperature determination unit 102, a first restriction control unit 104, a second restriction control unit 106, and a normal control unit 108.

Temperature control unit 102 determines whether the temperature Tw of the coolant is equal to or greater than the first temperature Tw(0). Temperature determination unit 102 further determines whether the temperature Tw of the coolant is smaller than the second temperature Tw(1).

The first temperature Tw(0) is a temperature smaller than the second temperature Tw(1) described later. The second temperature Tw(1) is a temperature at which the upper limit value Whv during HV running is determined as the upper limit value Wev during EV running. For example, the second temperature Tw(1) may be the same temperature as the threshold value at which cooling device 30 is in an abnormal state or may be a temperature smaller than the threshold value at which cooling device 30 is in an abnormal state. The first temperature Tw(0) and the second temperature Tw(1) may be adapted, for example, by experiments.

The abnormal state of cooling device 30 includes, for example, a state in which a failure of a component of cooling device 30 disables prescribed cooling performance or a state in which a temperature increase of the power converter increases the temperature Tw of the coolant.

Temperature determination unit 102 may turn on a first temperature determination flag, for example, if it is determined that the temperature Tw of the coolant is equal to or greater than the first temperature Tw(0). Temperature determination unit 102 may turn on a second temperature determination flag, for example, if the temperature Tw of the coolant is smaller than the second temperature Tw(1).

First restriction control unit 104 executes first restriction control of restricting discharged power from power storage device 16 if it is determined that the temperature Tw of the coolant is equal to or greater than the first temperature Tw(0) and smaller than the second temperature Tw(1) during EV running of vehicle 100.

If the temperature Tw of the coolant increases from the first temperature Tw(0) to the second temperature Tw(1) during EV running of vehicle 100, first restriction control unit 104 determines the upper limit value Wev of discharged power such that the reduction rate of the upper limit value Wev of discharged power from power storage device 16 in accordance with an increase of the temperature Tw of the coolant during EV running is greater than the reduction rate of the upper limit value Whv of discharged power from power storage device 16 in accordance with an increase of the temperature Tw of the coolant during HV running, and controls the discharged power from power storage device 16 so as not to exceed the determined upper limit value Wev.

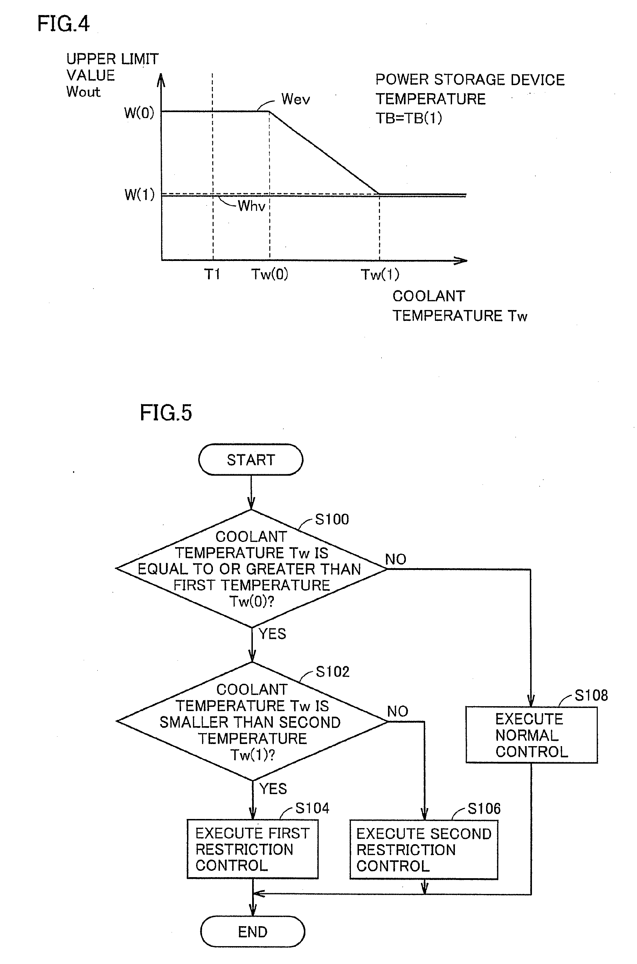

Specifically, as shown in Fig. 4, during EV running, if the temperature Tw of the coolant increases from the first temperature Tw(0) to the second temperature Tow(1), first restriction control unit 104 determines the upper limit value Wev such that the upper limit value of discharged power decreases linearly from W(0) to W(1) with respect to an increase of the temperature Tw of the coolant.

Fig. 4 is a diagram showing the relation between the temperature Tw of the coolant and each of the upper limit value Wev of discharged power during EV running and the upper limit value Whv of discharged power during HV running, where the temperature TB of power storage device 16 is TB(1). The vertical axis in Fig. 4 shows the upper limit value Wout of discharged power from power storage device 16, and the horizontal axis in Fig. 4 shows the temperature Tw of the coolant.

If the temperature Tw of the coolant increases from the first temperature Tw(0) to the second temperature Tw(1), the amount of variation ΔW of the upper limit value Wev with respect to an increase of the temperature Tw of the coolant may be calculated, for example, using a formula ΔW = (W(1) - W(0)) / (Tw(1) - Tw(0)), or may be a predetermined value. The upper limit value Wev may be determined, for example, using a map, a mathematical expression, or a table created based on the relation shown in Fig. 4.

For example, first restriction control unit 104 may provisionally determine the upper limit value based on the temperature TB of power storage device 16 and the relation between the temperature TB and the upper limit value Wev as shown in Fig. 2 and then determine the final upper limit value Wev by multiplying the difference between the actual value of the temperature Tw of the coolant and the first temperature Tw(0) by ΔW and adding the resultant value.

On the other hand, during HV running, as shown in Fig. 4, the upper limit value W(0) is determined as the upper limit value Whv of discharged power, irrespective of a variation of the temperature Tw of the coolant, as long as the temperature TB of power storage device 16 does not vary. Even during HV running, the upper limit value Whv may be changed in accordance with a variation of the temperature Tw of the coolant. In this case, control is performed such that the reduction rate of the upper limit value Wev > the reduction rate of the upper limit value Whv.

In the present embodiment, first restriction control unit 104 executes control when the temperature Tw of the coolant increases from the first temperature Tw(0) to the second temperature Tw(1). However, first restriction control unit 104 may execute the first restriction control, for example, when the first temperature determination flag and the second determination flag are both turned on.

In the present embodiment, as long as first restriction control unit 104 can monotonously reduce the upper limit value of discharged power in accordance with an increase of the temperature Tw of the coolant when the temperature Tw of the coolant increases from the first temperature Tw(0) to the second temperature Tow(1), the present invention is not specifically limited to the linear decrease from W(0) to W(1). For example, first restriction control unit 104 may determine the upper limit value Wev such that the upper limit value of discharged power linearly decreases or monotonously decreases from W(2) smaller than W(0) and greater than W(1), to W(3) different from W(1) and smaller than W(2).

Further, when the temperature Tw of the coolant increases from the first temperature Tw(0) to the second temperature Tw(1), the upper limit value Wev is not necessarily reduced linearly with respect to an increase of the temperature Tw of the coolant and, for example, may be reduced stepwise or reduced non-linearly.

Second restriction control unit 106 executes second restriction control of restricting discharged power from power storage device 16 when the temperature Tw of the coolant is equal to or greater than the second temperature Tw(1) during EV running of vehicle 100. Second restriction control unit 106 may execute the second restriction control, for example, when the first temperature determination flag is turned on and the second temperature determination flag is turned off.

If the temperature Tw of the coolant is equal to or greater than the second temperature Tw(1) during EV running of vehicle 100, second restriction control unit 106 determines the upper limit value Whv of discharged power during HV running, as the upper limit value Wev of discharged power during EV running, and controls discharged power from power storage device 16 so as not to exceed the determined upper limit value Wev.

In the present embodiment, the description is given assuming that second restriction control unit 106 sets the same value as the upper limit value Whv which varies according to the temperature TB of power storage device 16, if the temperature Tw of the coolant is equal to or greater than the second temperature Tw(1). However, second restriction control unit 106 determines a certain upper limit value as the upper limit value Wev, irrespective of the temperature TB of power storage device 16.

Normal control unit 108 executes normal control for discharged power from power storage device 16 if it is determined that the temperature Tw of the coolant is smaller than the first temperature Tw(0) during EV running of vehicle 100. Normal control unit 108 may perform the normal control for discharged power from power storage device 16, for example, when the first temperature flag and the second temperature flag are both turned off.

More specifically, if it is determined that the temperature Tw of the coolant is smaller than the first temperature Tw(0), normal control unit 108 determines the upper limit value Wev based on the relation between the temperature TB of power storage device 16 and the upper limit value Wev of discharged power as shown in Fig. 2, and controls discharged power from power storage device 16 so as not to exceed the determined upper limit value Wev.

In the present embodiment, all of temperature determination unit 102, first restriction control unit 104, second restriction control unit 106, and normal control unit 108 function as software implemented by the CPU of ECU 26 executing a program stored in a memory, although they may be implemented by hardware. Such program may be recorded in a storage medium and installed in vehicle 100.

Referring to Fig. 5, a control structure of the program executed in ECU 26 serving as the vehicle control apparatus according to the present embodiment will be described. It is noted that this program is executed by ECU 26 during EV running. ECU 26 may determine whether EV running or not based on a state of vehicle 100 (for example, vehicle speed or engine speed).

In step (hereinafter "step" is denoted by S) 100, ECU 26 determines whether the temperature Tw of the coolant of cooling system 30 is equal to or greater than the first temperature Tw(0). , If it is determined that the temperature Tw of the coolant of cooling system 30 is equal to or greater than the first temperature Tw(0) (YES in S100), the process proceeds to S102. If not (NO in S100), the process proceeds to S108.

In S102, ECU 26 determines whether the temperature Tw of the coolant is smaller than the second temperature Tw(1). If the temperature Tw of the coolant is smaller than the second temperature Tw(1) (YES in S102), the process proceeds to S104. If not (NO in S102), the process proceeds to S106.

In S104, ECU 26 executes the first restriction control. In S106, ECU 256 executes the second restriction control. In S108, ECU 26 executes the normal control. It is noted that the first restriction control, the second restriction control, and the normal control are as described above, and therefore the detailed description thereof will not be repeated.

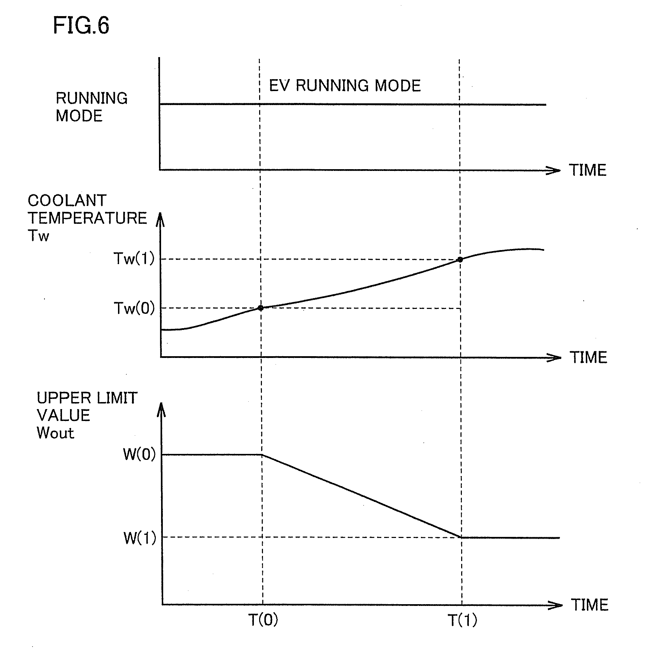

The operation of ECU 26 serving as the vehicle control apparatus according to the present embodiment based on the foregoing structure and flowchart will be described using Fig. 6. It is noted that the temperature TB of power storage device 16 is assumed as TB(1) for convenience of explanation.

For example, it is assumed that vehicle 100 runs with the EV running mode being selected. If it is determined in ECU 26 that vehicle 100 can continue EV running based on that SOC is equal to or greater than a threshold value to allow EV running, ECU 26 keeps vehicle 100 EV running using motor generator 10 with engine 2 shut down.

Until time T(0), the temperature Tw of the coolant is smaller than the first temperature Tw(0) (NO in S100). Therefore, ECU 26 executes the normal control (S108).

More specifically, ECU 26 determines the upper limit value W(0) of discharged power from power storage device 16 based on the relation between the temperature TB of power storage device 16 and the upper limit value Wev as shown in Fig. 2. Thus, ECU 26 controls discharged power from power storage device 16 so as not to exceed the upper limit value W(0).

On the other hand, when vehicle 100 continues uphill running or frequently repeats acceleration thereby to increase the amount of current through power converter 20, the amount of heat generated by power converter 20 increases. With the increased amount of heat generated by power converter 20, the temperature of power converter 20 increases, and the temperature Tw of the coolant increases accordingly.

At time T(0), if the temperature Tw of the coolant is equal to or greater than the first temperature Tw(0) (YES in S100) and smaller than the second temperature Tw(1) (YES in S102), ECU 26 executes the first restriction control (S104).

More specifically, if the temperature Tw of the coolant increases from the first temperature Tw(0) to the second temperature Tw(1) between time T(0) and time T(1), ECU 26 determines the upper limit value Wev such that the upper limit value decreases in proportion to the increase of the temperature Tw of the coolant. ECU 26 controls discharged power from power storage device 16 so as not to exceed the determined upper limit value Wev.

At time T(1), if the temperature Tw of the coolant is equal to or greater than the second temperature Tw(1) (NO in S102), ECU 26 executes the second restriction control (S106).

More specifically, ECU 26 determines W(1), which is the upper limit value Whv of discharged power from power storage device 16, as the upper limit value Wev, based on the relation between the temperature TB of power storage device 16 and the upper limit value Whv as shown in Fig. 3. ECU 26 controls discharged power from power storage device 16 so as not to exceed the upper limit value W(1).

In the present embodiment, when the temperature Tw of the coolant increases from the first temperature Tw(0) to the second temperature Tw(1), the upper limit value Wev decreases linearly with respect to the increase of the temperature Tw of the coolant. Therefore, discharged power from power storage device 16 is gently restricted as compared with when the upper limit value W(0) of discharged power from power storage device 16 is reduced to W(1) in a step-like manner immediately after the temperature Tw of the coolant reaches, for example, the second temperature Tw(1) or greater.

Furthermore, in the present embodiment, when the temperature Tw of the coolant reaches the second temperature Tw(1) or greater to indicate that cooling device 30 is in an abnormal state during EV running, the upper limit value Wev during EV running is set at the upper limit value Whv during HV running. This avoids the effect of heat on a component included in power converter 20 due to continuous EV running for a long time.

As described above, in the vehicle control apparatus according to the present embodiment, when the temperature Tw of the coolant increases from the first temperature Tw(0) to the second temperature Tw(1), the upper limit value Wev is determined such that the reduction rate of the upper limit value Wev of discharged power in accordance with an increase of the temperature Tw of the coolant during EV running is greater than the reduction rate of the upper limit value Whv of discharged power in accordance with an increase of temperature Tw of the coolant during HV running. Accordingly, acceleration of degradation of a component such as a semiconductor device included in the power converter can be prevented when EV running continues for a long time with the upper limit value Wout of discharged power from the power storage device being larger during EV running than during HV running. Therefore, the present invention provides a vehicle control apparatus and a vehicle control method for preventing the effect of heat from electric equipment for operating the electric motor due to an increase of discharged power from the power storage device.

Furthermore, when the temperature Tw of the coolant increases from the first temperature Tw(0) to the second temperature Tw(1), the upper limit value is determined such that the upper limit value Wev decreases linearly with respect to the increase of temperature Tw of the coolant, so that the upper limit value Wev of discharged power from the power storage device in accordance with the temperature Tw of the coolant can be reduced gently. Therefore, the present invention provides a vehicle control apparatus and a vehicle control method for gently restricting power supply in accordance with the temperature of the coolant of the electric equipment when the vehicle runs using the electric rotating machine with the internal combustion engine shut down.

It should be construed that embodiments disclosed herein are by way of illustration in all respects, not by way of limitation. It is intended that the scope of the present invention is defined by claims, not by the description above, and includes all modifications and variations equivalent in meaning and scope to the claims.

### REFERENCE SIGNS LIST

2 engine, 4 power split mechanism, 6, 10 motor generator, 8 transmission gear, 10 motor generator, 12 drive shaft, 14 wheels, 16 power storage device, 18, 20 power converter, 22 charger, 24 charging inlet, 27 memory, 28 EV priority switch, 30 cooling system, 32 coolant path, 34 water pump, 36 radiator, 38 coolant temperature sensor, 40 power storage device temperature sensor, 100 vehicle, 102 temperature determination unit, 104 first restriction control unit, 106 second restriction control unit, 108 normal control unit.

## Claims

1. A vehicle control apparatus installed in a vehicle (100) having an internal combustion engine (2) and an electric rotating machine (10) as driving sources, said vehicle (100) including said electric rotating machine (10), electric equipment (20) operating upon driving of said electric rotating machine (10), a power storage device (16) supplying electric power to said electric rotating machine (10) and said electric equipment (20) and being rechargeable using an external power source, and a cooling device (30) for cooling said electric equipment (20) using a cooling medium,
said vehicle control apparatus comprising:
a medium temperature detection unit (38) for detecting a temperature of said cooling medium; and
a control unit (26) for determining an upper limit value of discharged power from said power storage device (16) in accordance with the temperature of said cooling medium and controlling discharged power from said power storage device (16) so as not to exceed the determined said upper limit value, wherein
if the temperature of said cooling medium increases from a first temperature to a second temperature, said control unit (26) determines said upper limit value such that a reduction rate of said upper limit value in accordance with an increase of the temperature of said cooling medium at a time when said vehicle (100) runs in a first running state of running using motive power of said electric rotating machine (10) with said internal combustion engine (2) shut down is greater than a reduction rate of said upper limit value in accordance with an increase of the temperature of said cooling medium at a time when said vehicle (100) runs in a second running state of running using both motive power of said internal combustion engine (2) and motive power of said electric rotating machine (10).

2. The vehicle control apparatus according to claim 1, further comprising a power storage device temperature detection unit (40) for detecting a temperature of said power storage device (16), wherein
if the temperature of said power storage device (16) is equal to or greater than a predetermined temperature and if the temperature of said cooling medium is equal to or smaller than said first temperature, said control unit (26) controls discharged power from said power storage device (16) by increasing the upper limit value of said discharged power in accordance with the temperature of said power storage device when said vehicle (100) runs in said first running state as compared with when said vehicle (100) runs in said second running state.

3. The vehicle control apparatus according to claim 1, wherein if the temperature of said cooling medium is greater than said second temperature, said control unit (26) determines the upper limit value of said discharged power in the case where said vehicle (100) runs in said second running state, as the upper limit value of said discharged power in the case where said vehicle (100) runs in said first running state.

4. The vehicle control apparatus according to any one of claims 1 to 3,
wherein if the temperature of said cooling medium increases from said first temperature to said second temperature, said control unit (26) determines said upper limit value such that said upper limit value decreases linearly with respect to the temperature increase of said cooling medium.

5. A vehicle control method installed in a vehicle (100) having an internal combustion engine (2) and an electric rotating machine (10) as driving sources, said vehicle (100) including said electric rotating machine (10), electric equipment (20) operating upon driving of said electric rotating machine (10), a power storage device (16) supplying electric power to said electric rotating machine (10) and said electric equipment (20) and being rechargeable using an external power source, and a cooling device (30) for cooling said electric equipment (20) using a cooling medium,
said vehicle control method comprising the steps of:
detecting a temperature of said cooling medium; and
determining an upper limit value of discharged power from said power storage device (16) in accordance with the temperature of said cooling medium and controlling discharged power from said power storage device (16) so as not to exceed said upper limit value determined in said step of determining an upper limit value, wherein
if the temperature of said cooling medium increases from a first temperature to a second temperature, said step of controlling determines said upper limit value such that a reduction rate of said upper limit value in accordance with an increase of the temperature of said cooling medium at a time when said vehicle (100) runs in a first running state of running using motive power of said electric rotating machine (10) with said internal combustion engine (2) shut down is greater than a reduction rate of said upper limit value in accordance with an increase of the temperature of said cooling medium at a time when said vehicle (100) runs in a second running state of running using both motive power of said internal combustion engine (2) and motive power of said electric rotating machine (10).
